Europäisches Patentamt

(19) European Patent Office

Office européen des brevets

(11) Publication number: 0 082 657
B2

# (12) NEW EUROPEAN PATENT SPECIFICATION

(45) Date of publication of the new patent specification:
12.07.89

(21) Application number: 82306648.5

(22) Date of filling: 13.12.82

(51) Int. Cl.⁴: **C 02 F 5/10, C 23 F 11/10,
C 08 F 226/00, C 08 F 220/60,
C 08 F 220/34, C 08 F 230/02**

(54) Polyampholytes and their use.

(30) Priority: 15.12.81 US 331101
15.12.81 US 331102
17.05.82 US 378921
25.08.82 US 411174
25.08.82 US 411167
25.08.82 US 411173
25.08.82 US 411182

(43) Date of publication of application:
29.06.83 Bulletin 83/26

(45) Publication of the grant of the patent:
16.04.86 Bulletin 86/16

(45) Mention of the opposition decision:
12.07.89 Bulletin 89/28

(84) Designated Contracting States:
BE DE GB IT NL SE

(56) References cited:
DE-A-2 643 422
DE-A-2 829 018
US-A-3 709 815
US-A-4 085 060
US-A-4 131 583

(73) Proprietor: **CALGON CORPORATION, Route 60-
Campbell's Run Road, Robinson Township
Pennsylvania 15205 (US)**

(72) Inventor: **Costello, Christine A., 116 Essex Knoll
Drive, Coraopolis Pennsylvania 15108 (US)**
Inventor: **Matz, Gary F., 408 Wall Avenue, Pitcairn
Pennsylvania 15140 (US)**
Inventor: **Sherwood, Nancy S., 422 Scottsdale
Drive, Coraopolis Pennsylvania 15108 (US)**
Inventor: **Boffardi, Bennett P., 5723 Glen Hill Drive,
Bethel Park Pennsylvania 15102 (US)**
Inventor: **Yorke, Monica A., 1408 State Avenue,
Coraopolis Pennsylvania 15108 (US)**
Inventor: **Amjad, Zahid, 29331 Detroit Road Suite
5, West Lake Ohio 44145 (US)**

(74) Representative: **Crampton, Keith John Allen, D
YOUNG & CO 10 Staple Inn, London WC1V 7RD
(GB)**

EP 0 082 657 B2

## Description

Polyampholytes are polymers containing both a cationic and an anionic mer unit, nonionic mer units optionally being present. Polyampholytes have found particular use as retention aids in the paper industry (see for example, US Patents US-A-3 639 208 and US-A-4 171 417). There has also been some use of polyampholytes in the oil-drilling industry (see for example, published British patent Application GB-A-2 044 321, which discloses a copolymer additive prepared from (1) a meth(acrylamido alkyl sulfonic acid) or alkali metal salt thereof and (2) a (meth)acrylamide of N-alkyl (meth)acrylamide, which copolymer may be crosslinked with a quaternary ammonium salt, and US Patent US-A-4 330 450).

Scale deposits are incrustation coatings which may be formed from a wide variety of simple and complex inorganic salts that accumulate on the metallic surfaces of a water-carrying system through a number of different causes. Various industrial and commercial water-carrying systems are subject to scale-formation problems. Scale is of particular concern in heat-exchange systems using water, for example, boiler systems and once-through and open recirculating water-cooling systems.

The use of polyampholytes as scale and corrosion inhibitors appears unknown.

The invention provides a carboxylic polyampholyte polymer, having an intrinsic viscosity of 0.05 to 4.5 in 1.0 $\underline{M}$ NaCl and prepared from:

(a) 32.5 to 90 weight % of acrylic acid and/or methacrylic acid;

(b) 1.5 to 65 weight % of acrylamide; and

(c) 0.5 to 20 weight % of dimethyldiallyl ammonium chloride and/or diethyldiallyl ammonium chloride.

The present invention also provides a method of inhibiting corrosion and scale by inhibiting the precipitation and deposition of inorganic salts in an aqueous system, comprising adding to the aqueous system at least 0.1 ppm of such a polyampholyte or a salt of such a polyampholyte.

While the method of the present invention has been found particularly useful in providing inhibition of calcium phosphate scales and silica polymerization, inhibition of magnesium hydroxide, calcium fluoride, calcium carbonate, calcium sulfate and other scales may also be obtained.

The term "aqueous", as used herein, is intended to include water in any physical state and to include water in which is dissolved or dispersed any substance, for example, inorganic salts in brine or seawater.

The polyampholyte polymers may be prepared by mixing the monomers preferably in the presence of a free radical initiator. Any free radical initiator may be used. Examples include peroxides, azo initiators and redox systems. The preferred catalysts are sodium persulfate or a mixture of ammonium persulfate and any azo type initiator, such as 2,2'-azobis-(2,4-dimethyl-4-methoxyvaleronitrile). The polymerization may also be initiated photochemically.

The polyampholyte may be made by any of a variety of procedures, for example, in solution, suspension, bulk and emulsions.

The temperature is not critical. The reaction will generally occur between 10 and 100°C, preferably 40 to 60°C. It is generally impractical to run the reaction below room temperature because the reaction is too slow. Above a temperature of 60°C, the molecular weight of the polymer tends to decrease. The reaction, depending on the temperature, generally takes from 1 to 12 hours. Measuring for residual monomer will verify when the reaction is complete.

The pH of the reaction mixture is not critical. The pH is generally in the range of 4.5 to 9.0.

The molecular weight of ampholytic polymers is difficult to accurately measure. The polymers are instead, usually identified by intrinsic viscosity.

The intrinsic viscosity of the polyampholyte is not critical in the invention. It is preferred that it be at least .05 dl/g in 1.0 $\underline{M}$ sodium chloride (measured on a 75 Cannon Ubbelohde capillary viscometer).

The treatment concentration of the polyampholyte employed in the present invention to inhibit corrosion and scale deposit and formation is generally at least 0.1 ppm, preferably 0.1 to 500 ppm by weight of the total solution of the water-carrying system being treated. Preferably, the concentration level range will be from about 1.0 to 200 ppm.

The aqueous system may be any aqueous system, for example, a cooling water, boiler water, desalination or gas scrubber system. If the system is a desalination system, the polyampholyte should have an intrinsic viscosity below 2.8 dl/g in 1.0 $\underline{M}$ sodium chloride.

## Examples

### Preparation of the Polymers

**Polymers 1 to 32**

The polymers of the examples were produced by mixing the cationic, anionic and optional non-ionic monomers indicated in Table I, using the amounts, solids concentration, initial temperatures and pH indicated. The monomer mix was purged with nitrogen for one hour. The solvent was deionized water. The initiator was added and the components allowed to react for about 3 hours.

**Table I**

| Polymer | Monomer Cationic/Anionic/Non/Non-Ionic | Weight Percent | Initiator (Moles/Initiator/Moles Monomer) | Chain Transfer Agent | Percent Solids | pH | Temperature (°C) | [n][19] |
|---|---|---|---|---|---|---|---|---|
| 1 | DMDAAC[1]AA[2]/AM[3] | 1.5/48.2/50.3 | .003 SPS[4]/1.6x10$^{-4}$ SMBS[5] | - | 30 | 4.5 | 50 | 1.8 |
| 2 | DMDAAC/AA/AM | 2.5/32.5/65 | .003 SPS/1.6x10$^{-4}$ SMBS | - | 30 | 4.5 | 50 | 1.3 |
| 3 | DMDAAC/AA/AM | 2.5/47.5/50 | .003 SPS/1.6x10$^{-4}$ SMBS | - | 30 | 4.5 | 50 | 1.8 |
| 4 | DMDAAC/AA/AM | 2.5/62.5/35 | .003 SPS/1.6x10$^{-4}$ SMBS | - | 30 | 4.5 | 50 | 1.9 |
| 5 | DMDAAC/AA/AM | 5/85/10 | .003 SPS/1.6x10$^{-4}$ SMBS | - | 30 | 4.5 | 50 | 0.82 |
| 6 | DMDAAC/AA/AM | 8/44/48 | .003 SPS/1.6x10$^{-4}$ SMBS | - | 30 | 4.5 | 50 | 0.91 |
| 7 | DMDAAC/AA/AM | 8/50/42 | .003 SPS/1.6x10$^{-4}$ SMBS | - | 30 | 4.5 | 50 | 0.93 |
| 8 | DMDAAC/AA/AM | 10/35/55 | .003 SPS/1.6x10$^{-4}$ SMBS | - | 30 | 4.5 | 50 | 1.50 |
| 9 | DMDAAC/AA/AM | 1/40/50 | .003 SPS/1.6x10$^{-4}$ SMBS | - | 30 | 4.5 | 50 | 1.60 |
| 10 | DMDAAC/AA/AM | 10/47/43 | .003 SPS/1.6x10$^{-4}$ SMBS | - | 30 | 4.5 | 75 | 0.55 |
| 11 | DMDAAC/AA/AM | 10/55/35 | .003 SPS/1.6x10$^{-4}$ SMBS | - | 30 | 4.5 | 50 | 2.2 |
| 12 | DMDAAC/AA/AM | 10/70/20 | .003 SPS/1.6x10$^{-4}$ SMBS | - | 30 | 4.5 | 50 | 2.8 |
| 13 | DMDAAC/AA/AM | 12/44/44 | .003 SPS/1.6x10$^{-4}$ SMBS | - | 30 | 4.5 | 50 | 1.54 |
| 14 | DMDAAC/AA/AM | 12/50/38 | .003 SPS/1.6x10$^{-4}$ SMBS | - | 30 | 4.5 | 50 | 1.70 |
| 15 | DMDAAC/AA/AM | 17.5/32.5/50 | .003 SPS/1.6x10$^{-4}$ SMBS | - | 30 | 4.5 | 50 | 1.0 |
| 16 | DMDAAC/AA/AM | 17.5/47.5/35 | .003 SPS/1.6x10$^{-4}$ SMBS | - | 30 | 4.5 | 50 | 1.6 |
| 17 | DMDAAC/AA/AM | 17.5/62.5/20 | .003 SPS/1.6x10$^{-4}$ SMBS | - | 30 | 4.5 | 50 | 3.3 |
| 18 | DMDAAC/AA/AM | 8/60/32 | 1.06x10$^{-4}$ Riboflavin/.053 SPS | 1.0 % IPA[16] | 30 | 4.5 | 50 | 3.3 |
| 19 | DMDAAC/AA/AM | 8/60/32 | 1.06x10$^{-4}$ Riboflavin | 20.0 % TRA[17] | 30 | 4.5 | 50 | 5.1 |
| 20 | DMDAAC/AA/AM | 10/47/43 | .003 SPS/6.4x10$^{-4}$ SMBS | 1.5 % IPA | 30 | 4.5 | 50 | 1.1 |
| 21 | DMDAAC/AA/AM | 10/47/43 | .003 SPS/6.4x10$^{-4}$ SMBS | 2.0 % IPA | 30 | 4.5 | 50 | 0.9 |
| 22 | DMDAAC/AA/AM | 10/47/43 | .003 SPS/6.4x10$^{-4}$ SMBS | 2.5 % IPA | 30 | 4.5 | 50 | 0.9 |
| 23 | DMDAAC/AA/AM | 10/47/43 | .003 SPS/6.4x10$^{-4}$ SMBS | 3.0 % IPA | 30 | 4.5 | 50 | 0.9 |
| 24 | DMDAAC/AA/AM | 10/47/43 | .003 SPS/6.4x10$^{-4}$ SMBS | 3.5 % IPA | 30 | 4.5 | 50 | 0.8 |
| 25 | DMDAAC/AA/AM | 10/47/43 | .003 SPS/6.4x10$^{-4}$ SMBS | 5.0 % IPA | 30 | 4.5 | 50 | 1.4 |
| 26 | DMDAAC/AA/AM | 10/47/43 | .003 SPS/6.4x10$^{-4}$ SMBS | 10.0 % IPA | 30 | 4.5 | 50 | 1.0 |
| 27 | DMDAAC/AA/AM | 10/47/43 | .003 SPS/6.4x10$^{-4}$ SMBS | 15.0 % IPA | 30 | 4.5 | 50 | 0.6 |
| 28 | DMDAAC/AA/AM | 10/47/43 | .003 SPS/6.4x10$^{-4}$ SMBS | 10.0 % TGA[21] | 30 | 4.5 | 50 | 0.38 |
| 29 | DMDAAC/AA/AM | 10/47/43 | .003 SPS/6.4x10$^{-4}$ SMBS | 12.0 % TGA | 30 | 4.5 | 50 | 0.36 |
| 30 | DMDAAC/AA/AM | 10/70/20 | .003 SPS/6.4x10$^{-4}$ SMBS | 8.0 % TGA | 30 | 4.5 | 70 | 0.30 |
| 31 | DMDAAC/AA/AM | 10/70/20 | .003 SPS/6.4x10$^{-4}$ SMBS | 12.0 % TGA | 30 | 4.5 | 70 | 0.23 |
| 32 | DMDAAC/AA/AM | 10/47/43 | .003 SPS/6.4x10$^{-4}$ SMBS | - | 30 | 4.5 | 50 | 2.0 |

[1]DMDAAC = dimethyldiallyl ammonium chloride
[2]AA = acrylic acid
[3]AM = acrylamide
[4]SPS = sodium persulfate
[16]IPA = isopropyl alcohol
[17]TEA = triethanol amine
[19]dl/g in 1.0 M sodium chloride, measured on a 75 Cannon Ubbelohde Capillary Viscometer
[20]TRP = t-butyl peroxy pivalate
[21]TGA = thio glycolic acid

**Polymer 33:**

A 90/10 acrylamide/dimethyldiallyl ammonium chloride copolymer was prepared in the same manner as Polymers 1 to 32. The copolymer was then hydrolysed by adding a stoichiometric amount of sodium hydroxide to achieve a 70/20/10 terpolymer of acrylic acid/acrylamide/dimethyldiallyl ammonium chloride.

**Examples 1-21** (Cooling Water)

Calcium phosphate inhibition was tested using 250 ppm Ca$^{++}$ and 6.0 mg/l PO$\equiv_4$ with 10 ppm of inhibitor, at a pH of 8.5 and at 60°C for 24 hours. The percent inhibition, as reported in TABLE II, was determined by measuring the PO$\equiv_4$ concentration in solution before and after the 24 hour period.

**Table II**

| Example | Polymer | Percent Inhibition |
|---------|---------|--------------------|
| 1 | 13 | 40 |
| 2 | 18 | 80 |
| 3 | 5 | 60 |
| 4 | 12 | 90 |
| 5 | 15 | 90 |
| 6 | 8 | 90 |
| 7 | 17 | 95 |
| 8 | 3 | 90 |
| 9 | 14 | 90 |
| 10 | 7 | 95 |
| 11 | 10 | 90 |
| 12 | 16 | 90 |
| 13 | 2 | 95 |

The percent inhibition of calcium phosphate was measured using 2.5 ppm and 5 ppm inhibitor, by the method outlined in Examples 1 - 13. The results are reported in TABLE III.

**Table III**

| Example | Polymer | Percent Inhibition | |
|---------|---------|---------|---------|
| | | 2.5 ppm | 5 ppm |
| 14 | 20 | 25 | 100 |
| 15 | 21 | - | 30 |
| 16 | 22 | 25 | 100 |
| 17 | 23 | 20 | 100 |
| 18 | 24 | 0 | 100 |
| 19 | 25 | 70 | 100 |
| 20 | 26 | 25 | 100 |
| 21 | 27 | 30 | 100 |

[1]DMDAAC = dimethyldiallylammonium chloride
[2]IPA = isopropyl alcohol

**Examples 22 - 29** (Desalination)

Steam was passed through a metal U tube to maintain the temperature at 240°F (115°C). The in tube was immersed in a cylindrical cell. Seawater, with a concentration factor of 1.6 times normal seawater, (pH 8.2) was passed through the cell at a rate of 600 ml/hr. After 24 hours, the scale deposited on the in tube was removed, weighed and analysed. The effectiveness is reported as inhibition, defined by the equation:

$$\frac{\text{blank scale rate - inhibition scale rate}}{\text{blank scale rate}} \times 100$$

The scaling rates were determined by the equation:

4

scale rate =

$$\frac{\text{weight of scale on tube (mg)}}{\text{test volume throughput (1)}}.$$

The % inhibition of various scale inhibitor mixtures is indicated in TABLE IV.

**Table IV**

| Example | Polymer | Active | Percent Inhibition |
|---|---|---|---|
| 22 | 28 | 5 | 85 |
| 23 | 29 | 5 | 95 |
| 24 | 30 | 5 | 76 |
| 25 | 31 | 5 | 70 |
| 26 | 29 | 2.5 | 79 |
| 27 | 29 | 7.5 | 78 |
| 28 | 32 | 5 | 62 |
| 29 | 12 | 5 | 0 (90 % Increase) |

**Examples 30 - 45** (Boiler Water)

Polymer 10 was added in the amount indicated in TABLE V to samples of synthetic boiler water containing varying amounts of $PO_4^=$, $OH^-$, $SiO_2$, $Mg^{++}$ and chelant (sodium nitrilotriacetic acid). Each Example was tested under three conditions; without any terpolymer, with 1 mg/l and with 10 mg/l of terpolymer. The mixtures were heated to 90°C and held at that temperature throughout the tests. The pH was maintained between 10 to 12. Each sample was observed after 1 hour, 4 or 5 hours, and 21 or 22 hours. The observations are described in TABLE V. The test is used to predict the effectiveness of he inhibitors in boiler water systems. Under the observation rankings, A is the most preferred result, whereas F is the least preferred result.

**Table V**

| | Dosage (mg/l) | | | | | No inhibitor | | | Observations Terpolymer (1 mg/l) | | | Terpolymer (10 mg/l) | | |
|---|---|---|---|---|---|---|---|---|---|---|---|---|---|---|
| Ex. | Na$_3$NTA | PO$_4$ | OH | SiO$_2$ | Mg$^{++}$ | 1 hr. | 4 hrs. | 21 hrs. | 1 hr. | 5 hrs. | 22 hrs. | 1 hr. | 5 hrs. | 22 hrs. |
| 30 | 56 | 50 | 500 | 100 | 10 | F | F | F | F | F | F | A | D | D |
| 31 | 56 | 5 | 500 | 100 | 10 | F | F | F | F | F | F | D | E | E |
| 32 | 56 | 50 | 50 | 100 | 10 | F | F | F | E | E | F | A | A | A |
| 33 | 56 | 5 | 50 | 100 | 10 | F | F | F | E | F | F | A | A | A |
| 34 | 56 | 50 | 500 | 10 | 10 | B | B/C | B/C | C | C | C | A | A | A |
| 35 | 56 | 5 | 500 | 10 | 10 | B | B/C | B/C | C | C | C | A | A | A |
| 36 | 56 | 50 | 50 | 10 | 10 | B/C | C | C | C | C | C | A | A | A |
| 37 | 56 | 5 | 50 | 10 | 10 | C | C | F | E | E | E | A | A | A |
| 38 | 56 | 50 | 500 | 100 | 1 | D | D | D | A | A | A | A | A | A |
| 39 | 56 | 5 | 500 | 100 | 1 | C | C | F | A | A | A | A | A | A |
| 40 | 56 | 50 | 50 | 100 | 1 | A | A | A | A | A | A | A | A | A |
| 41 | 56 | 5 | 50 | 100 | 1 | A | A | C | A | A | A | A | A | A |
| 42 | 56 | 50 | 500 | 10 | 1 | A | B | B | A | A | A | A | A | A |
| 43 | 56 | 5 | 500 | 10 | 1 | A | B | B | A | A | A | A | A | A |
| 44 | 56 | 50 | 50 | 10 | 1 | A | A | A | A | A | A | A | A | A |
| 45 | 56 | 5 | 50 | 10 | 1 | A | A | A | A | A | A | A | A | A |

A clear
B small particulates dispersed throughout the mixture
C small particulates settled on the bottom
D particulates agglomerated on the bottom to the size of a small cotton ball
E particulates agglomerated on the bottom to the size of a medium cotton ball
F particulates agglomerated on the bottom to the size of a large cotton ball

**Examples 46 - 57** (Gas Scrubbers)

Zeta potential is a measure of particle surface charge at the particle/water shear surface. An effective inhibitor will increase the charge, thus increasing the repuslive forces between particles. This will increase the dispersibility of the particles and decrease the coagulation, precipitation and subsequent scaling.

The Zeta potentials of magnetite (iron oxide) particles and of calcium carbonate and magnetite in a 70/30 weight blend were determined for 1 000 ppm suspensions in deionized water at varying pHs. 0.5 ppm and 5 ppm of various polymers were added to the suspensions and the zeta potential was remeasured. The change in the zeta potential after inhibitor addition, or zeta potential increase, is noted in TABLE VI. When the zeta potential increased, more stable suspensions were created. Mixed deposits of magnetite and calcium carbonate are particularly typical of deposits found in many gas scrubbing systems.

**Table VI**

| | | | | Zeta potential Increase (mV) | |
| Example | Polymer | Concentration (ppm) | pH | Magnetite | 70/30 Carbonate/Magnetite |
|---|---|---|---|---|---|
| 46 | 17 | 5.0 | 8 | -0.2 | 21.5 |
| 47 | 17 | 5.0 | 10 | 3.5 | 15.0 |
| 48 | 17 | 0.5 | 8 | 1.4 | 24.5 |
| 49 | 17 | 0.5 | 10 | -1.6 | 11.9 |
| 50 | 13 | 5.0 | 8 | 10.2 | 31.9 |
| 51 | 13 | 5.0 | 10 | 8.6 | 41.4 |
| 52 | 13 | 0.5 | 8 | 3.4 | 27.2 |
| 53 | 13 | 0.5 | 10 | 7.4 | 38.1 |
| 54 | 6 | 5.0 | 8 | 9.1 | 36.9 |
| 55 | 6 | 5.0 | 10 | 13.4 | 39.0 |
| 56 | 6 | 0.5 | 8 | 5.9 | 39.1 |
| 57 | 6 | 0.5 | 10 | 6.6 | 32.5 |

**Examples 58 - 60** (Silica Inhibition)

20.0 cc of 1.0 $\underline{M}$ sodium chloride, 8 cc of 0.1 $\underline{M}$ sodium silicate solution, and a predetermined amount of inhibitor, if any, were mixed and diluted with distilled water to give 100 mls final volume. The temperature of the mixture was held at about 40°C throughout the experiment and the pH was adjusted to 8.0 by the addition of hydrochloric acid. The silica monomer concentration was determined after 5.0 minutes by the molybdate method [Alexander, G B; JACS $\underline{75}$, 5055 (1953)] and at subsequent time intervals. The data were analysed by use of a second order kinetic plot and the polymerization rate was determined. TABLE VII records the effects of inhibitor on the silica polymerization process. A reduction in this polymerization rate is indicative of an expected reduction in the rate of silica deposition onto heat transfer and water transport surfaces in aqueous systems.

**Table VII**

| Example | Polymer | Dosage (ppm) | SiO$_2$ Polymerisation Rate (M$^{-1}$ Minute$^{-1}$) |
|---|---|---|---|
| 58 | None | - | 1.7 |
| 59 | 16 | 100 | 0.6 |
| 60 | 30 | 50 | 0.12 |

**Example 61** (Corrosion)

The coupon immersion test consisted of a cylindrical battery jar with a capacity of 8 litres. A Haake constant temperature immersion circulator (Model E-52) was used to control the solution temperature and agitate the controlled bath. The unit contained a 1000 watt fully adjustable stainless steel heater which permitted temperature control to ±0.01°C, and a 10 litre per minute pump with a built-in pressure nozzle agitator that ensured high temperature uniformity in the bath. A measured contact thermoregulator was used as the temperature sensing element.

6

The pH of the solution was controlled with a Kruger and Eckels Model 440 pH controller. This unit was capable of turning power on and off to a Dias minipump whenever the pH of the corrosive liquid environment fell below the set point. The peristaltic Dias pump, with a pumping capacity of 20 ml per hour, maintained the solution pH with the addition of sulfuric acid. Standard glass and saturated calomel electrodes were used as the sensing elements. The bath was continuously aerated at the rate of 60 cc per minute through a medium porosity plastic gas dispersion tube to ensure air saturation.

Two SAE 1010 steel coupons, each having a surface area of 4.2 square inches (24.1 cm$^2$), were suspended by a glass hook. The solution volume to test metal surface area ratio for the test was approximately 1000 : 1.

The composition of the synthetic water used in the test was as follows; indicating content per litre of distilled water:

| Ion: | $Ca^{++}$ | $Mg^{++}$ | $HCO_3^-$ | $Cl^-$ | $SO_4^=$ |
|---|---|---|---|---|---|
| ppm: | 88 | 24 | 40 | 70 | 328 |

The total hardness as $CaCO_3$ was 318 ppm and the pH was 7.5. The temperature was 50°C.

The test was conducted on the basis of a 2 - 3 day cycle: the system was treated with the corrosion inhibitor compositions indicated in TABLE I. After every second or third day, the test solution was discharged and a fresh solution was prepared. At the end of a 14 day cycle, the coupons were removed and analysed and the test was terminated. The corrosion rate of the coupons was measured by their weight loss during the 14 day cycle, and the result was calculated as mils per year (mpy). The test results are summarized in TABLE VIII.

**Table VIII**

| | Dosage | Corrosion Rate (mpy) | | | Turbidity (NTU) |
|---|---|---|---|---|---|
| Polymer | (ppm) | Steel | Copper | Admirality | Steel |
| - | 0 | 78.7 | 0.58 | 0.79 | 145 |
| 8 | 10 | 60.0 | 0.56 | 0.39 | 41 |

## Claims

1. A polyampholyte polymer having an intrinsic viscosity of 0.05 to 4.5 in 1.0 $\underline{M}$ NaCl and prepared from
   (a) 32.5 to 90 weight of acrylic acid and/or methacrylic acid;
   (b) 1.5 to 65 weight of acrylamide; and
   (c) 0.5 to 20 weight of dimethyldiallyl ammonium chloride and/or diethyldiallyl am monium chloride.
2. A method of inhibiting the precipitation and deposition of inorganic salts in an aqueous system, comprising adding to the aqueous system at least 0.1 ppm of a carboxylic functional polyampholyte polymer as claimed in Claim 1.

## Patentansprüche

1. Polyampholytpolymer mit einer Intrinsic-Viskosität von 0,05 bis 4,5 in 1,0 $\underline{M}$ NaCl, hergestellt aus
   (a) 32,5 bis 90 Gew.-% Acrylsäure und/oder Methacrylsäure;
   (b) 1,5 bis 65 Gew.-% Acrylamid; und
   (c) 0,5- bis 20 Gew.-% Dimethyldiallylammoniumchlorid und/oder Diethyldiallylammoniumchlorid.
2. Verfahren zur Inhibierung der Ausfällung und Ablagerung von anorganischen Salzen in einem wässrigen System, welches die Zugabe von wenigstens 0,1 ppm eines Polyampholytpolymeren mit Carboxylfunktionen, wie in Anspruch 1 beansprucht, zu dem wässrigen System umfaßt.

## Revendications

1. Polymère polyampholyte ayant une viscosité intrinsèque de 0,05 à 4,5 dans le NaCl 1,0 M et préparé à partir de
   (a) 32,5 à 90 % en poids d'acide acrylique et/ou d'acide methacrylique;
   (b) 1,5 à 65 % en poids d'acrylamide; et
   (c) 0,5 à 20 % en poids de chlorure de diméthyldiallylammonium et/ou de chlorure de diéthyldiallyammonium.
2. Procédé d'inhibition de la précipitation et de la déposition de sels minéraux dans un système aqueux comprenant l'addition au système aqueux d'au moins 0,1 ppm d'un polyampholyte à fonction carboxylique